# EUROPÄISCHE PATENTANMELDUNG

(11) **EP 0 643 373 A2**
(43) Veröffentlichungstag der Anmeldung: **15.03.1995**
(21) Anmeldenummer: 94113395.1
(22) Anmeldetag: 26.08.1994
(51) Int. Cl.: G07F 7/10, G06F 3/08

(54) **Vorrichtung zur Datenübertragung mittels Chipkarten**

(30) Priorität: 10.09.1993 DE 9313736 U
(71) Anmelder: SIEMENS AKTIENGESELLSCHAFT, D-80333 München (DE)
(72) Erfinder: Lang, Walter, D-90513 Zirndorf (DE)

(57) **Zusammenfassung**

Auf im Umlauf befindlichen Quelldaten-Chipkarten (KK1...KKn) sind Quelldaten (QD1...QDn) enthalten. Diese können in verteilt angeordneten Quelldaten-Verarbeitungseinheiten (DE1...DEz) mittels einer Lese- und Beschreibvorrichtung (C1...Cn) in einen internen Sammelspeicher (S1...Sz) geladen werden. Die gesammelten Daten können mit der Lese- und Beschreibvorrichtung einer der Quelldaten-Verarbeitungseinheiten bei Bedarf auf einer Sammeldatentransfer-Chipkarte (SK1...SKn) abgespeichert werden. In einer zentralen Sammeldaten-Verarbeitungseinheit (ZR) können die Sammeldatentransfer-Chipkarten (SK1...SKn) mittels mindestens einer zentralen Lese- und Beschreibvorrichtung (CL) gelesen werden. Die hierdurch eingelesenen Quelldaten (QD1...QDn) einzelner Quelldaten-Chipkarten (KK1...KKn) können somit in der Sammeldaten-Verarbeitungseinheit (ZR) weiterverarbeitet werden.

## Beschreibung

Datenübertragungsvorrichtungen sind traditionell kabelgebunden, d.h. es erfolgt die Datenübertragung in der Regel mittels einer sogenannten "on-line" Verbindung von zwei Datenverarbeitungsanlagen über Kabelstrecken. Dabei kann es sich um separate Standleitungen handeln, deren Nutzung nur exklusiv ausgewählten Teilnehmern möglich ist, bzw. es können z.B. von nationalen Postbehörden der Öffentlichkeit zur Verfügung gestellte Datennetze benutzt werden. Im Bereich der Deutschen Bundespost stehen hierzu z.B. die sogenannten Datex-J- bzw. Datex-P-Netze zur Verfügung. Daten können auch mittels Richtfunk oder über Satellitenstrecken übertragen werden. In allen diesen Fällen erfolgt die Datenübertragung durch direkte elektromagnetische Kopplung einer Sende- und einer Empfangsstation. Entsprechend codierte bzw. modulierte elektromagnetische Signalketten werden abgesendet und breiten sich entlang der Kabel- oder Funkstrecken aus.

Derartige Datenübertragungsvorrichtungen sind sehr leistungsfähig, da nahezu unbeschränkt große Datenmengen in außerordentlich kurzer Zeit übertragbar sind. Diesen Vorteilen steht aber ein sehr großer technischer und finanzieller Aufwand zum Aufbau und Betrieb gegenüber. So wird zur Ankopplung z.B. einer Datenverarbeitungsanlage an ein Datenübertragungsnetz ein sogenanntes Modern benötigt, welches die Daten in der für das jeweilige Netz benötigten Form und Geschwindigkeit einspeist. Derartige Modems sind insbesondere in Hochgeschwindigkeitsausführung sehr aufwendig. Zum anderen treten bei der Benutzung von Datenübertragungsnetzen zum Teil nicht unerhebliche Benutzungskosten in Form von sogenannten on-line-Gebühren. Bereits für die Einräumung einer Zugangsberechtigung für die Benutzung eines Datennetzes müssen in vielen Fällen feste Pauschalbeträge an den Netzbetreiber abgeführt werden, bevor der Nutzer mit der eigentlichen Datenübertragung beginnen kann.

Ein weiterer Nachteil der oben beschriebenen Form von Datenübertragungen liegt in der in vielen Fällen relativ starken Ortsgebundenheit der zur elektrischen Ankopplung z.B. an ein Übertragungsnetz benötigten technischen Einrichtungen. So ist z.B. der Anschluß an ein von einer Fernmeldebehörde eines Landes bereitgestelltes Datennetz häufig nur sinnvoll in einem Gebäude möglich, welches über entsprechende Steckvorrichtungen zum Kabelanschluß verfügt. Andererseits sind die zum Anschluß einer Datenverarbeitungseinheit an Mobilfunk- bzw. Mobiltelefonendgeräte benötigten technischen Einrichtungen wiederum technisch außerordentlich aufwendig und kostenintensiv.

Demgegenüber liegt der Erfindung die Aufgabe zugrunde, eine Datenübertragungsvorrichtung anzugeben, mit der eine flexible Übertragung von Daten auch über weite Strecken bei einer größtmöglichen Ortsungebundenheit zumindest auf der Seite der Dateneinspeisung auf eine technisch einfache und kostengünstige Weise möglich ist.

Die Aufgabe wird gelöst mit der im Anspruch 1 angegebenen Vorrichtung. Vorteilhafte Ausführungsformen derselben sind in den Unteransprüchen angegeben.

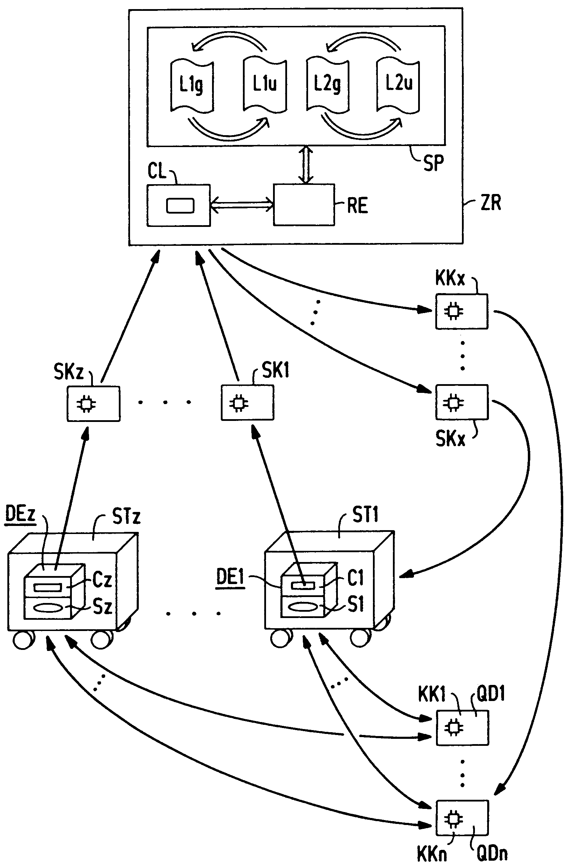

Anhand eines in der Figur dargestellten Blockschaltbildes wird die erfindungsgemäße Datenübertragungsvorrichtung näher erläutert. Den Ausgangspunkt der Datenübertragung stellen eine Vielzahl von Quelldaten-Chipkarten KK1...KKn dar, welche Quelldaten QD1...QDn mit beliebigem Sinngehalt enthalten. Bei den Quelldaten-Chipkarten KK1...KKn kann es sich bevorzugt um handelsübliche Chipkarten z. B. im Format der weitverbreiteten sogenannten Telefonkarten handeln. Das Ziel besteht nun darin, Quelldaten QD1...QDn teilweise oder vollständig von beliebigen der im Umlauf befindlichen Quelldaten-Chipkarten KK1...KKn auf einfache, kostengünstige und schnelle Weise einer zentralen Sammeldaten-Verarbeitungseinheit ZR zum Zwecke der irgendwie gearteten Weiterverarbeitung zugänglich zu machen. Die Quelldaten-Chipkarten KK1...KKn sind in der Regel beliebig räumlich verteilt, und befinden sich bevorzugt im Besitz von bestimmten Kundenkreisen.

Die erfindungsgemäße Datenübertragungsvorrichtung verfügt hierzu über eine Vielzahl von verteilten Quelldaten-Verarbeitungseinheiten DE1...DEz, welche mindestens jeweils eine Lese- und Beschreibvorrichtung für Chipkarten C1...Cz und je einen internen Sammelspeicher S1...Sz für Quelldaten aufweisen. Über die Lese- und Beschreibvorrichtung können Quelldaten teilweise oder vollständig von beliebig zugeführten Quelldaten-Chipkarten KK1...KKn in den internen Sammelspeicher S1...Sz einer Quelldaten-Verarbeitungseinheit geladen werden.

Die verteilten Quelldaten-Verarbeitungseinheiten DE1...DEz sind bevorzugt in dezentral angeordneten Dienstleistungsstationen ST1...STz untergebracht. Diese können ortsfest sein, z.B. in Form von Gebäuden, Automaten, Ladengeschäften, Kiosken, bzw. mobil sein, z.B. in Form von Fahrzeugen oder beweglichen Handgeräten für Personen. Die Energieversorgung von Quelldaten-Verarbeitungseinheiten DE1...DEz im Inneren z.B. von mobilen Dienstleistungsstationen erfolgt bevorzugt über regenerative Energiequellen, z.B. Batterien, Akkumulatoren, Generatoren oder Solarzellen.

Die Quelldaten-Verarbeitungseinheiten DE1...DEz befinden sich somit bevorzugt in zentral zugänglichen und als eine Art Sammelstelle dienenden Dienstleistungsstationen ST1...STz, oder können bei mobiler Ausführung derselben an einen vorübergehend als Sammelstelle dienenden Ort gebracht werden. Die Quelldaten QD1...QDn auf sehr vielen von denjenigen Quelldaten-Chipkarten KK1...KKn, welche in einer begrenzten Region kursieren, können somit auf einfache Weise zu einer geeignet aufgestellten Quelldaten-Verarbeitungseinheit gelangen und mittels deren Lese- und Beschreibvorrichtung in dem dortigen internen Sammelspeicher gebündelt werden.

Die erfindungsgemäße Datenübertragungsvorrichtung weist als weiteres Element Sammeldatentransfer-Chipkarten SK1...SKz auf. Hierauf können mit Hilfe der Lese- und Beschreibvorrichtung C1...Cz von irgend einer der Quelldaten-Verarbeitungseinheiten DE1...DEz zumindest die im dazugehörigen Sammelspeicher S1...Sz enthaltenden Quelldaten QD1...QDn abgespeichert werden. Bevorzugt werden jeweils nach Ablauf eines festen Zeitraumes, z.B. eines Tages oder einer Woche, die Quelldaten QD1...QDn im Sammelspeicher Sz einer Quelldaten-Verarbeitungseinheit DEz auf einer einzigen, der jeweiligen Quelldaten-Verarbeitungseinheit DEz zugeordneten Sammeldatentransfer-Chipkarte SKz abgespeichert.

Vorteilhaft können die im Umlauf befindlichen Quelldaten-Chipkarten KK1...KKn und die Sammeldatentransfer-Chipkarten SK1...SKn vom gleichen Typ sein.

Vorteilhaft können ferner die Quelldaten-Verarbeitungseinheiten DE1...DEz mit geringem technischen Aufwand aufgebaut werden, da sie lediglich die Aufgabe der Zusammenführung von Quelldaten auf dem jeweiligen internen Sammelspeicher haben und somit keinerlei anspruchsvolle, u.U. anwenderprogrammgesteuerte Datenbearbeitungen ausführen müssen.

Gemäß einer weiteren, vorteilhaften Ausführungsform wird von der Lese- und Beschreibvorrichtung Cz einer Quelldaten-Verarbeitungseinheit DEz nach dem Laden von Quelldaten QD1...QDn von einer beliebigen der im Umlauf befindlichen Quelldaten-Chipkarten KK1...KKn ein die jeweils geladene Quelldatenmenge kennzeichnender Sperrvermerk auf die jeweilige Quelldaten-Chipkarte KKn zurückgeschrieben. Gelesene Quelldatenmengen können auf der jeweiligen Quelldaten-Chipkarte auch irreversibel gelöscht werden. Durch derartige Maßnahmen wird bei einem erneuten Lesen der Quelldaten-Chipkarte KKn in der Lese- und Beschreibvorrichtung Cz einer möglicherweise anderen Quelldaten-Verarbeitungseinheit DEn der Zugriff auf die Menge der noch verbliebenen, gültigen Quelldaten QDn erleichtert.

Entsprechend der Darstellung im Blockschaltbild der Figur weist die erfindungsgemäße Datenübertragungsvorrichtung schließlich eine zentrale Sammeldaten-Verarbeitungseinheit ZR auf. Diese enthält mindestens eine zentrale Lese- und Beschreibvorrichtung CL für Sammeldatentransfer-Chipkarten SK1...SKz und einen Zentralprozessor RE mit einem angeschlossenen Hauptspeicherbereich SP. Hiermit können über die mindestens eine zentrale Lese- und Beschreibvorrichtung CL von Sammeldatentransfer-Chipkarten SK1...SKz eingelesene Quelldaten QD1...QDn einer Vielzahl einzelner Quelldaten-Chipkarten KK1...KKn in beliebiger Weise weiterverarbeitet werden.

Vorteilhaft sind wiederum die Lese- und Beschreibvorrichtungen C1...Cn in den Quelldaten-Verarbeitungseinheiten DE1...DEz und die mindestens eine zentrale Lese- und Beschreibvorrichtung CL in der Sammeldaten-Verarbeitungseinheit ZR vom gleichen Typ.

Bei einer weiteren Ausführung der Erfindung werden im Hauptspeicherbereich SP der Sammeldaten-Verarbeitungseinheit ZR vom Zentralprozessor RE Listen verwaltet, womit zumindest die Anzahlen der im Umlauf befindlichen Quelldaten- und Sammeldaten-Chipkarten KK1...KKn, SK1, SKz gezählt bzw. verwaltet werden. Im Blockschaltbild der Figur sind hierzu beispielhaft vier Listen L1g, L1u und L2g, L2u symbolisch dargestellt. Dabei enthält die Liste L1g z.B. die Kennungen der im Umlauf befindlichen, aber noch nicht vollständig bearbeiteten Quelldaten-Chipkarten. Diese Chipkarten verfügen somit über Quelldaten, welche bislang noch nicht in den Sammelspeicher einer Quelldaten-Verarbeitungseinheit eingelesen worden sind. Demgegenüber enthält die Liste L1u die Anzahl der im Umlauf befindlichen, aber momentan bereits vollständig bearbeiteten Quelldaten-Chipkarten. Diese Chipkarten enthalten somit keine Quelldaten mehr, welche noch nicht in die Sammeldaten-Verarbeitungseinheit ZR zurückgelangt sind, und somit für die möglicherweise unbekannt sind.

In der gleichen Weise werden in einer Liste L2g die im Umlauf befindlichen und noch nicht zur zentralen Datenverarbeitungseinheit zurückgelangten Sammeldatentransfer-Chipkarten verwaltet. Demgegenüber sind in der Liste L2u die momentan vollständig bearbeiteten Sammeldatentransfer-Chipkarten enthalten. Die Pfeile zwischen den Listen L1g und L1u bzw. L2g und L2u im Blockschaltbild sollen symbolisieren, daß die zu Quelldaten-Chipkarten bzw. Sammeldatentransfer-Chipkarten gehörigen Datensätze abhängig von ihren Bearbeitungszustand zwischen den Listen transferiert werden können.

Bevorzugt werden die von der zentralen Lese- und Beschreibvorrichtung CL von Sammeldatentransfer-Chipkarten SK1...SKz QD1...QDn vom Zentralprozessor RE derart sortiert, daß diejenigen der im Umlauf befindlichen Quelldaten-Chipkarten KKn ermittelbar sind, deren Quelldaten QDn bereits vollständig in den internen Sammelspeicher S1...Sz von einer oder mehrerer Quelldaten-Verarbeitungseinheiten DEn geladen worden waren, und mit Hilfe von Sammeldatentransfer-Chipkarten SKz zur zentralen Sammeldaten-Verarbeitungseinheit ZR gelangt sind.

Schließlich ist es auch möglich, daß in die zentrale Sammeldaten-Verarbeitungseinheit ZR zurückgelaufene, verbrauchte Quelldaten-Chipkarten KK1...KKn und/oder Sammeldatentransfer-Chipkarten SK1...SKz zum Zwecke der Wiederverwertung regeneriert werden. Die Regenerierung kann dabei z.B. mit Hilfe der zentralen Lese- und Beschreibvorrichtung CL erfolgen. Die regenerierten Quelldaten-Chipkarten und Sammeldatentransfer-Chipkarten sind in dem in der Figur dargestellten, beispielhaften Blockschaltbild in Form der Karten KKx bzw. SKx dargestellt und gelangen auf üblichem Weg wieder in den Umlauf.

Die erfindungsgemäße Vorrichtung zur Datenübertragung kann vorteilhaft für die unterschiedlichsten Zwecke eingesetzt werden.

Eine beispielhafte Anwendung zur Übertragung von Daten, welche Zeitschriftenabonnements betreffen, soll nachfolgend kurz erläutert werden. Dabei haben die Quelldaten-Chipkarten KKn die Funktion von sogenannten "Abonnement-Karten". Die darauf befindlichen Quelldaten QDn können Informationen enthalten z.B. über den jeweiligen Kartenbesitzer und die von diesem für einen Zeitraum abonnierten Zeitschriftentitel. Ferner kann auf den Chipkarten die Anzahl der vom Abonnenten bereits entgegengenommenen Zeitschriftenausgabenexemplare enthalten sein. Vorteilhaft wird diese über die Lese- und Beschreibvorrichtung Cz in einer Quelldaten-Verarbeitungseinheit DEz z.B. beim Empfang einer Zeitschrift auf die jeweilige Quelldaten-Chipkarte rückgeschrieben. Die Quelldaten enthalten dann die noch nicht verbrauchte Anzahl von Ausgabestücken.

Bei dieser Verwendung der erfindungsgemäßen Datenübertragungsvorrichtung befinden sich die Quelldaten-Verarbeitungseinheiten DE1...DEz in stationären oder mobilen Zeitschriftenkiosken. Die von diesen für jede vorgelegte Quelldaten-Chipkarte KKn abgegebene Zeitschriftenmenge wird im internen Sammelspeicher Sz abgelegt und bei Bedarf z.B. pro Tag bzw. pro Woche auf eine Sammeldatentransfer-Chipkarte SKz geladen. Diese wird dann in der mindestens einen zentralen Lese- und Beschreibvorrichtung CL einer bevorzugt in einer zentralen Zeitschriftenauslieferungsstelle bzw. einem Verlagsunternehmen befindlichen Sammeldaten-Verarbeitungseinheit ZR ausgelesen. Mittels einer folgenden Auswertung können eine Vielzahl von Aktionen ausgelöst werden, z.B. die Neubelieferung der Zeitschriftenkioske mit aktuellen Zeitschriftentiteln, die Verrechnung der verkauften Exemplare mit dem Kiosk, u.v.m..

Die erfindungsgemäße Datenübertragungsvorrichtung ist aber für eine sehr große Vielzahl weiterer Anwendungen vorteilhaft einsetzbar.

So können z.B. die Quelldaten-Chipkarten KKn die Funktion von "Fahr-Karten" übernehmen. Die darauf befindlichen Quelldaten QDn können wiederum Angaben über den jeweiligen Kartenbesitzer, die für diesen zugelassenen Fahrstrecken und die Anzahl gekaufter Fahrstreckenbenutzungen bzw. die Anzahl noch nicht verbrauchter Streckenbenutzungen enthalten. Die Quelldaten-Verarbeitungseinheiten DEz befinden sich dann entweder stationär an Haltepunkten der jeweiligen Verkehrsmittel, z.B. an Bahnhöfen bzw. Bushaltestellen, bzw. mobil im Inneren der Verkehrsmittel.

Bei einer weiteren möglichen Verwendung der erfindungsgemäßen Datenübertragungsvorrichtung haben die Quelldaten-Chipkarten KKn die Funktion von "Tank-Karten". Die darauf befindlichen Quelldaten QDn können Informationen betreffen über den jeweiligen Karteninhaber, die für diesen zugelassenen Kraftstoffsorten und die absolute Menge des gekauften Kraftstoffes bzw. die aktuell noch nicht verbrauchte Kraftstoffmenge. In diesen Fall befinden sich die Quelldaten-Verarbeitungseinheiten bevorzugt direkt an Zapfsäulen bzw. an den Kassenbereichen von Tankstellen.

Bei einer weiteren möglichen Anwendung der erfindungsgemäßen Datenübertragungsvorrichtung haben die Quelldaten-Chipkarten KKn die Funktion von sogenannten "Catering-Karten". Die darauf befindlichen Quelldaten QDn können in diesem Fall Angaben über den jeweiligen Kartenbesitzer und die jeweils gekaufte Anzahl von Essenseinheiten bzw. die Anzahl noch nicht verbrauchter Essenseinheiten betreffen. Die Quelldaten-Verarbeitungseinheiten DEz bei dieser Verwendung sind bevorzugt im Kassenbereich von Kantinen, in Essensautomaten auf Flughäfen, in Verkehrsmitteln wie z.B. Zügen und dergleichen angeordnet.

Bei allen genannten Anwendungen werden in der erfindungsgemäßen Weise die in den internen Sammelspeichern Sz der verteilten Quelldaten-Verarbeitungseinheiten DEz gesammelten Quelldaten QDn mit Hilfe der Sammeldatentransfer-Chipkarten SKz abgespeichert, und können somit auf einfache Weise in einer zentralen Sammeldaten-Verarbeitungseinheit ZR weiterverarbeitet werden.

Die erfindungsgemäße Datenübertragungsvorrichtung zeichnet sich somit durch eine größtmögliche Flexibilität und Ortsungebundenheit aus, und ist dennoch außerordentlich kostengünstig aufbaubar. Sie kann somit flächendeckend nicht nur regional, sondern für komplette Länder eingeführt werden. So wird durch eine mögliche Typgleichheit der eingesetzten Quelldaten-Chipkarten und Sammeldatentransfer-Chipkarten, und in der gleichen Weise durch eine mögliche Typgleichheit zwischen den Lese- und Beschreibvorrichtung Cz in den verteilten Quelldaten-Verarbeitungseinheiten DEz und der mindestens einen zentralen Lese- und Beschreibvorrichtung CL der technischen Aufwand erheblich reduziert. Ferner erfordert der Aufbau der Quelldaten-Verarbeitungseinheiten DEz lediglich einen Mindestaufwand von Hard- und Software. Die dort befindlichen Lese- und Beschreibvorrichtungen für Chipkarten Cz und die internen Sammelspeicher Sc haben lediglich die Aufgabe, die von den Quelldaten-Chipkarten KKn erfaßten Quelldaten so zwischenzuspeichern, daß'dieser nach Ablauf einer bestimmten Zeitraumes auf eine Sammeldatentransfer-Chipkarte SKz übertragen werden können. Die erfindungsgemäße Datenübertragungsvorrichtung ist somit zum einen leicht aufbaubar, ermöglicht aber trotzdem größtmögliche Flexibilität und Ortsungebundenheit.

## Patentansprüche

1. Vorrichtung zur Datenübertragung, mit
a) Quelldaten-Chipkarten (KK1...KKn),
b) verteilten Quelldaten-Verarbeitungseinheiten (DE1... DEz) mit jeweils zumindest einer Lese- und Beschreibvorrichtung (C1...Cz) für Chipkarten, womit Quelldaten (QD1...QDn) von Quelldaten-Chipkarten (KK1...KKn) in einen internen Sammelspeicher (S1...Sz) geladen werden können,
c) Sammeldatentranfer-Chipkarten (SK1...SKz), worauf mit der Lese- und Beschreibvorrichtung (C1...Cz) einer Quelldaten-Verarbeitungseinheit (DE1...DEz) zumindest die im dazugehörigen Sammelspeicher (S1...Sz) enthaltenen Quelldaten (QD1...QDn) abgespeichert werden können, und
d) einer zentralen Sammeldaten-Verarbeitungseinheit (ZR), welche aufweist
e1) mindestens eine zentrale Lese- und Beschreibvorrichtung (CL) für Sammeldatentranfer-Chipkarten (SK1...SKz), und
e2) einen Zentralprozessor (RE) mit einem Hauptspeicherbereich (SP), womit die über die zentrale Lese- und Beschreibvorrichtung (CL) von Sammeldatentransfer-Chipkarten (SK1...SKz) eingelesenen Quelldaten (QD1...QDn) einzelner Quelldaten-Chipkarten (KK1...KKn) weiterverarbeitet werden können.

2. Vorrichtung nach Anspruch 1, wobei von der Lese- und Beschreibvorrichtung (C1...Cz) einer Quelldaten-Verarbeitungseinheit (DE1...DEz) nach dem Laden von Quelldaten (QD1...QDn) von einer Quelldaten-Chipkarte (KK1...KKn) ein die jeweils geladene Quelldatenmenge kennzeichnender Sperrvermerk auf die Quelldaten-Chipkarte (KK1...KKn) rückgeschrieben wird.

3. Vorrichtung nach Anspruch 1 oder 2, wobei jeweils nach Ablauf eines festen Zeitraumes die Quelldaten (QD1...QDn) im Sammelspeicher (S1...Sz) einer Quelldaten-Verarbeitungseinheit (DE1...DEz) auf einer einzigen Sammeldatentransfer-Chipkarte (SK1...SKz) abgespeichert werden.

4. Vorrichtung nach einem der vorangegangenen Ansprüche, wobei im Hauptspeicherbereich (SP) der Sammeldaten-Verarbeitungseinheit (ZR) vom Zentralprozessor (RE) Listen (L1g,L1u,L2g,L2u) verwaltet werden, womit zumindest die Anzahlen der im Umlauf befindlichen Quelldaten- und Sammeldaten-Chipkarten (KK1...KKn; SK1...SKz) gezählt werden.

5. Vorrichtung nach Anspruch 4, wobei die von der zentralen Lese- und Beschreibvorrichtung (CL) von Sammeldatentransfer-Chipkarten (SK1...SKz) eingelesenen Quelldaten (QD1...QDn) vom Zentralprozessor (RE) derart sortiert werden, daß diejenigen Quelldaten-Chipkarten (KK1...KKn) ermittelbar sind, deren Quelldaten (QD1...QDn) vollständig in den internen Sammelspeicher (S1...Sz) von einer oder mehreren Quelldaten-Verarbeitungseinheiten (DE1...DEn) geladen worden waren.

6. Vorrichtung nach einem der vorangegangenen Ansprüche, wobei verbrauchte Quelldaten-Chipkarten (KK1...KKn) und/oder Sammeldatentransfer-Chipkarten (SK1...SKz) in der zentralen Sammeldaten-Verarbeitungseinheit (ZR) für die Wiederverwendung regeneriert werden.
